(19)

**Europäisches Patentamt**
**European Patent Office**
**Office européen des brevets**

(11) **EP 2 383 695 A1**

(12) **EUROPEAN PATENT APPLICATION**

(43) Date of publication:
**02.11.2011 Bulletin 2011/44**

(21) Application number: **10165882.1**

(22) Date of filing: **14.06.2010**

(51) Int Cl.:
**G06T 3/40** $^{(2006.01)}$ **G09G 5/391** $^{(2006.01)}$
**G06T 5/50** $^{(2006.01)}$

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **28.04.2010 US 328933 P**

(71) Applicants:
• **Max-Planck-Gesellschaft zur Förderung
der Wissenschaften e.V.
80539 München (DE)**
• **Universität des Saarlandes
66123 Saarbrücken (DE)**

(72) Inventors:
• **Didyk, Piotr
58-300 Walbrzych (PL)**
• **Ritschel, Tobias
65187 Wiesbaden (DE)**
• **Myszkowski, Karol
66133 Saarbruecken (DE)**
• **Seidel, Hans-Peter
66386 St. Ingbert (DE)**
• **Eisemann, Elmar
66123 Saarbrücken (DE)**

(74) Representative: **Bach, Alexander et al
Mitscherlich & Partner
Patent- und Rechtsanwälte
Sonnenstraße 33
80331 München (DE)**

(54) **Apparent display resolution enhancement for moving images**

(57) The invention comprises a method for displaying a digital image ($I_H$) on a display, the digital image having a higher resolution than the display, the method comprising the steps:
- generating a sequence of digital subimages ($I_{L1}$, ..., $I_{Ln}$) having display resolution, based on the digital image ($I_H$); and
- displaying the digital subimages in sequence; characterized in that the sequence of digital subimages are generated based on a model of the retina.

EP 2 383 695 A1

**Description**

The present invention relates to a method and a device for enhancing the apparent display resolution of moving images.

Due to physical limitations of existing display devices, real-world luminance, colors, contrast, as well as spatial details cannot be directly reproduced. Even though hardware is constantly evolving and images are skillfully tone and gamut mapped to adapt them to the display capabilities, these limitations persist.

In particular, limited spatial resolution of current displays makes the depiction of very fine spatial details difficult.

One context in which resolution plays a crucial role is scale-preserving rendering. In the real world, individual hair strand may clearly be distinguished, while such details are usually rendered much thicker on a computer display, hence affecting realism. Metallic paint, as often applied to cars, can have sub-pixel size sparkling effects where a higher resolution may increase faithfulness. Fidelity sensitive applications (e. g. product design, virtual hair styling, makeup design or even surgical simulations) suffer from such shortcomings.

Further, there is a clear mismatch between available sensors exceeding 10 mega-pixel resolution and current display capabilities. While zooming allows exploring details, seeing the whole image or larger parts in full detail is often more appealing. Downsampling to the resolution of an output device is common practice for displaying such mega-pixel images, but high-frequency spatial image details are filtered out thereby.

In computer graphics, details are easily modeled but the image-display stage may ruin the visual effect. This is particularly striking for the current trend of smaller devices, where resolution is often very limited. In many cases, scrolling is used to present textual information or larger images to the user.

US 7,548,662 B2 (Basu et al.) discloses a system and process for creating an apparently higher resolution image on a display exhibiting a lower resolution, by creating multiple versions of an image at different offsets in a smooth path, all of which contain different bits of detail, and then animate through the resulting images, i.e. show them in rapid succession. However, the methods disclosed for creating the subimages are prone to apparent aliasing and temporal flickering. Moreover, a circular path is necessary to produce a least-objectionable motion.

The method by Basu et al. is further based on linear filtering of the high resolution frame to derive subimages, which prevent local adaptation to the image content. In such a scenario it is impossible to simultaneously optimize more than one subimage at once and to distribute the outcome of optimization across a number of subimages.

It is therefore an object of the present invention to provide an improved method and device for enhancing the perception of digital images having fine spatial details, when displayed on devices actually having a comparatively lower resolution.

This object is achieved by the method and the device according to the independent claims. Advantageous embodiments are defined in the dependent claims.

According to the invention, sub-pixel image motion may be used to increase the perceived resolution. Image motion ensures that the pixel grid projects to different locations on the retina. More particularly, by using sequentially varying intermediate images at the display resolution, subpixel details may be resolved at the retina in the region of interest due to fixational eye tracking of this region.

The method steps described in connection with the invention may be implemented on a computer on a dedicated hardware unit.

These and further aspects and advantages of the present invention will become more apparent when considering the following description of an embodiment of the present invention, in connection with the annexed drawing, in which

Fig. 1    is a schematic illustration of how fixational eye tracking over a region of interest in combination with a low-resolution image sequence leads to an apparent high-resolution image via integration in the retina.

Fig. 2    is an illustration of the principle of spatio-temporal signal integration. Left: Two pixels (yellow and blue square) covered by receptors (circles). Right: Intensity response of receptors A-E over time for changing pixel intensity in three frames (dotted lines). For static receptors (A, B and E) the resolution cannot be improved because the same signal is integrated over time. Due to motion (arrow), receptors C and D, although beginning their integration in the same pixel, observe different signals which may be exploited for resolution enhancement.

Fig. 3    shows how the inventive frame optimization for rapid display, which takes into account a velocity of moving image, can improve perceived resolution in the direction of movement. The inventive technique is compared to Lanczos resampling. Note that moving cases are simulations of perceived images assuming decomposition into 3 subimages. The result is based on the inventive optimization. For moving Lanczos, each subimage is computed as a filtered version of the translated original image. The eye simulation is computed as a integration of subimages by assuming a perfect tracking.

Fig. 4    shows the effect of flickering reduction. Left: Original high resolution image. Center: Reduction map. Right: Outcome of Lanczos filtering, as well as the inventive approach before and after flickering reduction for the marked regions. Note that in the regions of strong temporal contrast reduction an improvement over Lanczos filtering is visible. Similar to Fig. 2, images for the inventive approach are simulations of perceived images assuming motion and perfect eye tracking.

Fig. 5    shows a comparison of the inventive method against Lanczos in 3:1 scale (left) and original scale (middle) as well as Mitchell-Netravali (right).

Fig. 6    shows a comparison of standard filtering vs. the invention with respect to character recognition. Dark horizontal lines indicate significant statistical difference.

Fig. 7    shows examples of high resolution images used in a study of the inventive method in relation to static images.

Fig. 8    shows examples of snapshots used in a study with dynamic image sequences.

Detailed description of an embodiment of the invention

The invention may be applied to static images as well as to sequences of images having dynamic content.

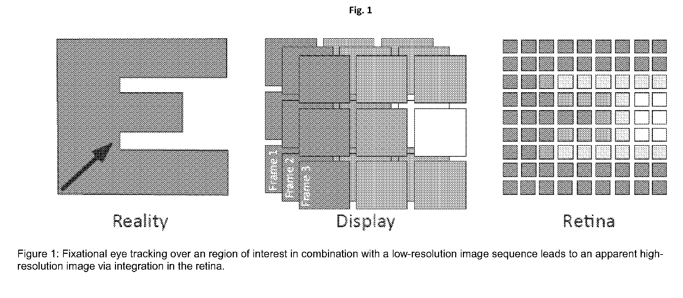

Figure 1 is a schematic illustration of how fixational eye tracking over a region of interest in combination with a low-resolution image sequence leads to an apparent high-resolution image via integration in the retina.

According to the invention, a high-resolution input image is transformed into N images of the target display resolution, called subimages. Then, the subimages are displayed sequentially on a high refresh rate display (e.g., 120 Hz).

In a first embodiment of the invention dealing with the case of a static image, a shift may be applied at the end of each rendering cycle, e.g. by one pixel. In the case of moving images, the eye tracking may be estimated based on a derived motion flow between subsequent images. It may be assumed that the motion is piecewise linear for different image regions, and thus that the inventive technique may be applied locally. The process is then restarted from the new position (in case of a linear shift/static image) or continued with the new image (in case of a dynamic image sequence).

This results in the impression of a smooth motion. When an observer focuses on an interesting image detail, the eye will track the feature and a *smooth pursuit eye motion* (SPEM) of matching velocity is established. According to the invention, this is critical because then the subimage details are consistently projected to predictable locations of the fovea region, which features the highest density of cone photoreceptors in the retina.

By exploiting the integration in the human eye (both temporal, via quickly displayed subimages, and spatial, via rigid alignment of moving and retinal images), the effect of apparent resolution enhancement is achieved.

More particularly, the highest anatomically determined density of cones in the fovea is estimated as 28" (arc seconds) [Curcio et al. 1990] which, according to the Nyquist's theorem, enables to distinguish 1D sine gratings of roughly $60^{cycles}/_{deg}$ resolution. At the same time, the pixel size of a typical full-hd desktop display, such as a 120 Hz Samsung SyncMaster 2233 considered by the inventors, when observed from 50 cm distance amounts to roughly 1.5' (arc minutes), which means that 1 pixel covers roughly 9 cones, at least in the central fovea region, and dropping quickly with the excentricity [Curcio et al., 1990]. Further, in many situations an observer might actually be closer to the screen, as is the case for hand-held devices.

The invention does not consider the eye optic's low-pass filter, which perfectly matches the foveal photoreceptor density and removes frequencies that would lead to aliasing. Interestingly, the HVS is still able to interpolate a feature position with an accuracy higher than 20 % of the distance between cones in the fovea, although this visual hyperacuity is more a localization than a resolution task (the position of one image element must be located relative to another, e. g., slightly shifted lines in the Vernier acuity task [Wandell 1995, p. 239].

The perception of motion, where information on object moving in a 3D world is inferred from 2D retinal images is a complex process [Wandell 1995, C.10]. The invention concentrates on a simpler case of moving 2D images that are stabilized on the retina through SPEM. As confirmed in an eye tracking experiment [Laird et al. 2006] such stabilization is almost perfect for steady linear motion with velocity in the range of 0.0625-2.5 $^{deg}/_s$, considered by the invention. The performance stays very good up to 7 $^{deg}/_s$. SPEM initialization is a fast process and good tracking is achieved in less than 100 ms. This is faster than typical saccades (200 ms [Krauzlis and Lisberger 1994]), which makes switching the tracking between moving objects with different velocities and in different directions an easy and effortless process. This is very important for handling dynamic content using the proposed technique. While the eye undergoes additional fixational eye movements such as tremors, drifts, and microsaccades, they are similar to the static fixation, and it is believed that the HVS accounts for such movements and suppresses their influence on perception [Martinez-Conde et al. 2004]. Schütz et al. [2008] reported a 16% increase of visual sensitivity during SPEM for foveally presented luminance stimuli of medium and high spatial frequencies compared to the static case. This HVS mechanism serves towards a better recognition of tracked objects, which contributes to the human survival skills. Also, visual hyperacuity is maintained for moving targets at uniform velocity in the range of 0-4 $^{deg}/_s$, [Fahle and Poggio 1981]. Moreover, an illusory displacement can be observed when displaying two parts of a line with a milliseconds delay [Burr 1979] because for both targets the HVS assumes a smooth motion and their different perceived locations are correlated with the delay between their exposures. Fahle and Poggio [1981] stress the role of the constant velocity assumption as an important constraint in the target position interpolation by the HVS.

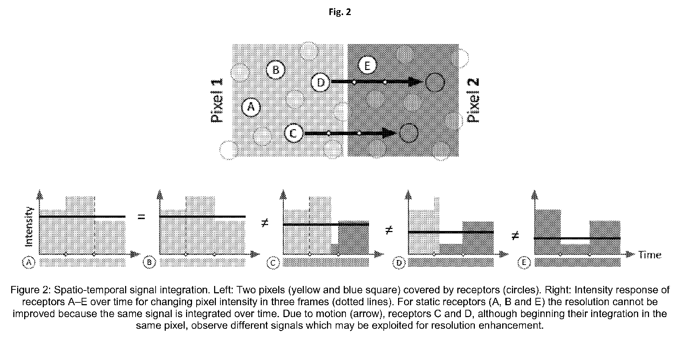

Figure 2 is an illustration of the principle of spatio-temporal signal integration. On the top, two pixels (yellow and blue square) are covered by receptors, depicted as circles. Below, the intensity response of receptors A to E over time for changing pixel intensity in three frames (dotted lines) is shown.

For static receptors (A, B and E), the resolution cannot be improved because the same signal is integrated over time. Due to motion (arrow), receptors C and D, although beginning the integration in the same pixel, observe different signals which may be exploited for resolution enhancement.

The light response of the human photoreceptor is a well-studied issue by neurobiophysicists [Van Hateren 2005]. The present invention relies on psychophysical findings, which take into account the interaction between photoreceptors as well as higher-level vision processing.

First, a static photoreceptor with an integration time of T may be considered that observes a pixel position p of image I. If I changes over time and is thus a function of time and space, the response may be obtained by integrating I (p,t) over time. More particularly, if the receptor moves over the image during this duration T on a path p(t), then the integrated result is:

$$\int_0^T I\big(p(t),t\big)\,dt.$$

$$(1)$$

This model may now be used in order to predict a perceived image for arbitrary subpixel images.

However, simplifying assumptions are made about the layout of photoreceptors on the retina. While the real arrangement is complex and non-uniform [Curcio et al. 1990, Fig. 2], the present embodiment of the invention assumes, without limitation, a uniform grid-aligned positioning with a higher density than the image resolution. This reflects the fact that in the dense region of the fovea multiple receptors observe a single pixel.

Moreover, as indicated by equation (1), it is not possible to increase the resolution of a static image without eye movement. In such a case, neighboring receptors that observe the same display pixel also share the same integrated information (Fig. 2, receptors A and B).

Precisely, this observation implies that for a given time t0, I(p(t), t0) is constant for all p(t) in the same pixel and I(p(t0), t) is constant during the display of the same pixel intensities. Therefore, Eq. 1 becomes a weighted finite sum of pixel values:

$$\sum_{t=0}^T w_t I\big(p(t),t\big)$$

$$(2)$$

This equation suggests two crucial conclusions. First, the simulation can be achieved via a summation, which allows applying a discrete optimization strategy. Second, for differing paths p(t) (even if only the starting points differ) the outcome of the integration generally differs. This is the key in increasing the apparent resolution. Due to the changing correspondence between pixels and receptors during SPEM, as well as the temporally varying pixel in formation, differing receptors usually receive differing information (Fig. 2, receptors C and D). Consequently, one may control smaller regions in the retina than the projection of a single pixel.

From the above, an optimization process may be obtained for transforming a high-resolution input into an optimal sequence of subimages.

First, the simple case of a static high-resolution 1D image $I_H$ shall be investigated. For each high-resolution pixel, a single receptor $r_i$ is assumed, while the assumed 1D display may only render a low-resolution image $I_L$. By way of example, it is assumed that the resolution of $I_H$ is twice as high as the resolution of $I_L$ and that the image is moved with a velocity of half a display pixel per frame. In general, the value of each display pixel may be changed on a per-frame basis. In the present example, it is assumed that all receptors track the high-resolution image perfectly.

Hence, after two frames, all receptors have moved exactly one screen pixel. The process is again in the initial configuration and the same two-frame subimage sequence may be repeated. This is a general property for integer movements. In such a case, one can reuse the subimage sequence after a few iterations. This is interesting for static images where one can choose a displacement direction and achieve an enhanced appearance using only a small amount of texture memory.

For this particular 1D case, each receptor will, while tracking the image, either see the color of exactly one pixel during the duration of two frames or of two consecutive pixels. More precisely, following Eq. 2, receptor i captures:

$$r_i = \begin{cases} (I_L(i,0) + I_L(i,1))/2 & : i\%2 == 0 \\ (I_L(i,0) + I_L(i+1,1))/2 & : i\%2 == 1 \end{cases} \tag{3}$$

In order to make the retinal response best match $I_H$, $r_i$ should be close to $I_H(i)$. This can be formulated as a linear system:

$$W \begin{pmatrix} I_L^1 \\ I_L^2 \end{pmatrix} = I_H \tag{4}$$

where $I_L(i)$ is the subimage displayed at time t and W a matrix that encodes the transfer on the receptors according to Eq. 3.

In the considered scenarios, the matrix W is overdetermined, meaning that there are more independent equations in the system than variables (unknown pixels in subimages). It may be assumed that there are less pixels displayed over time than the total resolution of the original image and the resolution of the retina is considered to be at least as big as the resolution of the original image. The final solution may be found using a constrained quadratic solver [Coleman and Li 1996].

While a standard solver would also provide a solution that is coherent with respect to the invention's model, a constrained solver respects the physical display limitations with respect to brightness. Therefore, one must assure that the final subimages may be displayed within the range of zero (black) to one (white). The problem is convex and so the convergence can be guaranteed.

It is also possible to use fast solvers producing only approximate solutions, for example, a GPU implementation of gradient decent algorithm, where constraints are enforced by clipping the final result to the possible range (black and white) in each iteration. Although such a solution will not give as good result as a constrained solver in terms of error, it can still significantly improve the quality of the displayed content in comparison to standard downsampling methods.

It is natural, that subimages contain aliasing. The receptors will integrate the image along the motion path and therefore integrate, hence, filter the values. Nonetheless, the inventive optimization minimizes the residual of the perceived final image with respect to the original high resolution version. Therefore, as long as the original frame does not exhibit aliasing problems, the optimization avoids aliasing in the perceived image as well, as shown in experiments by the inventors.

The previous example extends to a general movement. Instead of Eq. 3, the integration weights from Eq. 2 must be calculated.

For static images one needs to introduce motion, but for dynamic sequences the motion that exists in the animation may be exploited, or in some applications motion is naturally present and one may just exploit it, e.g., a stock tickers as often used by news channels, slowly scrolls text, especially on portable devices.

Thus, one may consider

- motion of the whole image and apply the inventive technique to the whole image uniformly,
- local motion and then optimize displayed image content based on its local velocity

In order to generalize the above-described approach to dynamic image sequences, only minor changes are needed. The main idea is to assume that the SPEM equals the motion flow that was extracted from the scene.

Alternatively, one may rely on an eye tracker. More particularly, when an eye tracker determines the local region of image tracking, the application of the inventive method can be limited to the very local image region that is tracked and a lot on computation can be saved, which is performed in this case only for the specific region.

If the input sequence runs at 40 Hz, one may then use the 3 in-between frames on a 120 Hz display to create subimages, that are locally-defined just in the same way as for the static image (the receptor trajectory is defined by the motion flow - instead of a predefined shifting position - and the weights for the linear system may be derived - just like before - from the underlying path over the low resolution pixels).

Such a motion flow can be derived with the perfect precision for 3D rendering in computer graphics or slightly less precisely through classical optical flow computation directly from video (standard operation in modern TV sets, video compression etc.). It is also possible that information on SPEM is provided by an eye tracker. The resulting optimization problem may be solved as before.

In a further embodiment, the images of an image sequence may be segmented into regions of coherent velocity/ motion and then each region may be processed separately.

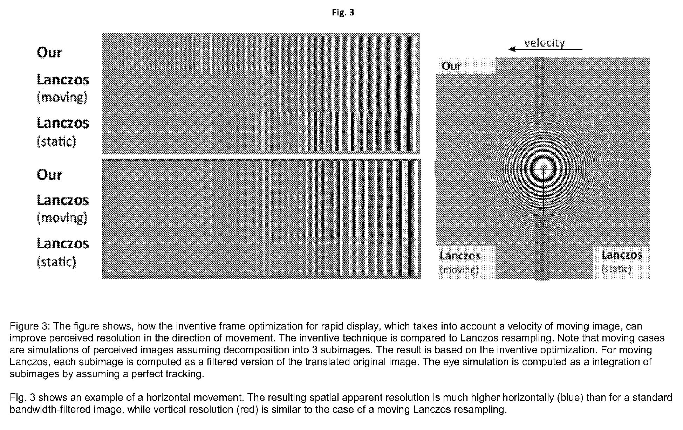

Figure 3 shows an example for horizontal movement. The resulting apparent spatial resolution is much higher horizontally (blue) than for a standard bandwidth filtered image, while vertical resolution (red) is similar to the case of a moving Lanczos resampling.

More particularly, Figure 3 shows how the frame optimization for rapid display according to the invention, which takes into account the velocity of a moving image, can improve perceived resolution in the direction of movement. The inventive technique is compared to Lanczos resampling. Moving cases are simulations of perceived images assuming decomposition into 3 subimages. The result is based on the optimization according to the invention. For moving Lanczos, each subimage may be computed as a filtered version of the translated original image. The eye simulation may be computed as an integration of subimages by assuming a perfect tracking.

It is possible to treat more general movements by adapting the integration weights wt from Eq. 2. Basically, the weights should be proportional to the time, that a pixel's color is seen by a photoreceptor. To formally compute these weights, one may introduce one weight $w_{x,y,t}$ for each pixel value $I_{x,y}^t$ where x, y is a discrete pixel position and t the discrete time interval during which the pixel's color is constant, such that: $\int_0^T I(p(t),t)dt = \sum w_{x,y,t} I_{x,y}^t$ . It follows:

$$w_{x,y,t} := \int \chi(i,j)(p(t)) \chi_k(t) dt , \qquad (5)$$

where $\chi$ describes the characteristic function. Precisely, $\chi(i,j)(p(t))$ equals one if p(t) lies in pixel (i, j), else it is zero, $\chi_k$(t) is a similar function to test the time intervals. One underlying assumption is that the receptor reaction is immediate with respect to a changing signal. Consequently, temporal integration corresponds to a box filter in the temporal domain.

Temporal Flickering

The inventive approach relies on a sequential display of subpixel values, which potentially causes temporal flickering. Due to the eye pursuit the resulting signal affects photoreceptors with a frequency imposed by the display device refresh rate. Over the critical flicker frequency (CFF) [Kalloniatis and Luu 2009], flickering is not perceivable, the subpixel intensities are fused, and a steady appearance is reached. Flickering perception is complex and the CFF depends on many factors such as the adaptation luminance, spatial extent of the flickering pattern, and retinal region (the fovea or periphery) at which this pattern is projected. The CFF rises roughly linearly with the logarithm of time-averaged background intensity (the Ferry-Porter law). The specific CFF values for different adaptation luminance have been measured as the temporal contrast sensitivity function [de Lange 1958] for stimuli of the spatial extent of 2° (angular degrees). What is important for this work is that CFF significantly reduces for smaller stimuli [McKee and Taylor 1984; Mäkelä et al. 1994]. The CFF is the highest in the fovea, except for bright adaptation conditions and large stimuli, when flickering is better perceived at the periphery.

The eye has certain latency and rapidly changing information is integrated over a small period of time, which depends on the CFF. In most cases, a 120 Hz screen was used and three subimages displayed, before advancing by one pixel and displaying the same three subimages again. Hence, each subimage is displayed with 40 Hz. Although this frequency is generally below the CFF as later discussed in relation to the work of Hecht and Smith, 40Hz is usually close to the CFF in the context of the invention. Higher refresh rates would rather allow adding even further subimages and, consequently, would lead to further improvements of the apparent resolution.

The previous result respects the limits of the display device, but it does not necessarily respect the limits of the HVS. The crucial assumption is that the HVS integrates a fixed number of subimages and the inventive method only works if their pixel information is fused without producing objectional flickering. The invention proposes a postprocessing strategy to adapt the temporal variation of the subimage sequence. Although it is applied in this particular context, the method is general. It can be executed in milliseconds on the GPU and could be used in other contexts, e.g., to detect and then remedy temporal aliasing for real-time rendering.

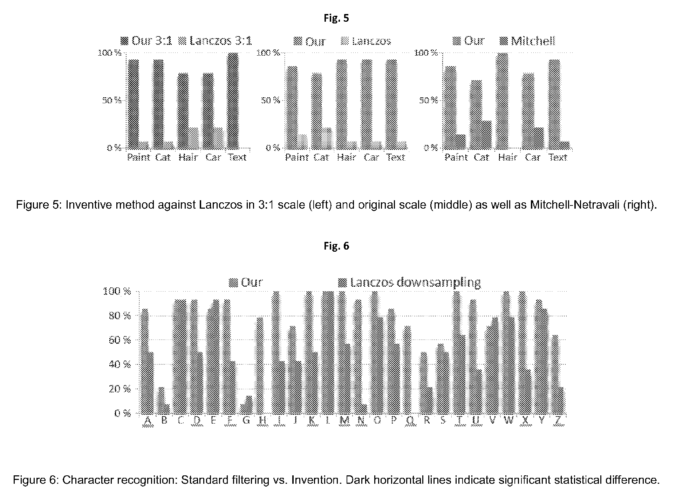

Related experiments with flickering visibility of thin line stimuli (with the angular length up to 2°) indicate a poor eye performance, both in the fovea and periphery [McKee and Taylor 1984, Fig. 5]. Further evidence exists that the sensitivity generally drops rapidly for small patterns [Mäkelä et al. 1994, Fig. 1]. This hints at flickering being mostly visible in large uniform regions, but this is of advantage to the inventive method, as these uniform regions are those lacking detail. Consequently, the subimages generated by a method according to the invention will strongly resemble the original input, eliminating any value fluctuations.

Hecht and Smith [Kalloniatis and Luu 2009, Fig. 10] found that for a stimuli of 0.3° angular extent and adaptation luminance below 1000cd/m2, the CFF does not exceed 40 Hz. Similar observations can be made in the Ferry-Porter law that indicates a roughly linear CFF increase with respect to the logarithm of time-averaged background intensity, but again the law no longer holds beyond 40 Hz where the CFF starts to stagnate. This seems to indicate that the choice of three intermediate images for a 120 Hz display is very appropriate. In practice, only a few flickering artifacts were encountered when displaying a three subimage solution unprocessed. Consequently, the postprocessing according to the invention leaves most of the original solution unaltered. In practice, one can skip flickering processing in such a scenario. Nevertheless, when longer integration times are used, either by adding more subimages, or by reducing the display's refresh rate the flickering processing improves the result significantly. This way, on a 120 Hz display, four subimages became possible. In case of a 60 Hz display, 2 images can be handled.

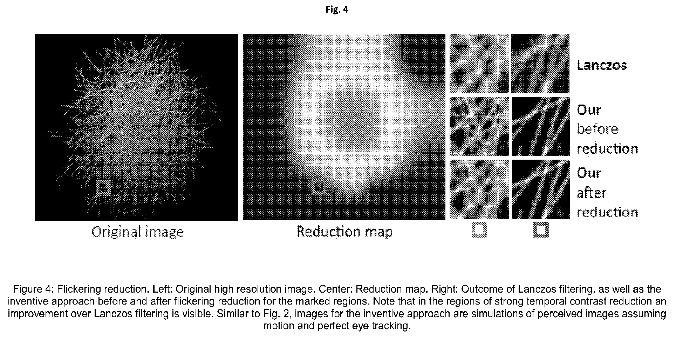

Such case is illustrated in figure 4, which shows an original high resolution image and a map of temporal contrast reduction, outcome of Lanczos filtering, as well as the optimization approach according to the invention before and after flickering reduction for the marked region in the original image. Four subimages lead to more details than the three-subframe solution and one may work with lower velocities.

The inventive approach keeps the highest amount of detail possible while ensuring that the outcome does not result in a perceivable flickering as detected by the inventive flickering model. The blur in Fig. 4 (a blue region after flickering reduction) is a natural consequence of this trade-off between detail/flickering and low-resolution/no-flickering. Since the inventive optimization guarantees that the resulting image fits to the display range, which is also the case for energy-preserving Lanczos filter, any interpolation between such a pair of images cannot cause intensity clipping. Artifacts, e.g., ringing cannot occur, because the reduction map, used for blending, needs only to be a conservative bound in order to detect perceived flickering. Hence, it is possible to find a conservative band-limited image (in practice, a dilation followed by smoothing).

One alternative way to suppress flickering would be to incorporate the constraints on the maximal temporal fluctuations of the signal into the optimization, but this has disadvantages. The process would no longer be quadratic. It would increase computation times and put pressure on the hard constraints needed to match the display's dynamic range, but such a solution can be considered.

A second alternative is the flicker suppression via temporal smoothing, but such attempts prove inadequate. Temporal smoothing combines information that should be kept separate to achieve the resolution enhancement according to the inventive model. To illustrate this, consider the receptor C in figure 2 moving from one pixel to the next at time t. Filtering over time, would introduce information in the first pixel that occurs after time t, this information was not supposed to be seen by C which at time t is already in the second pixel. This combination of time and space is exploited in the inventive model.

The flicker detection model according to the invention is multi-scale, conforming to the scale-dependence of the CFF. It derives per-scale reductions that are pushed to the pixel level where the final contrast reduction happens. In detail, one first computes the maximal intensity fluctuation in each pixel of the inventive subimages. Because flickering is strongly scale-dependent [Mäkelä et al. 1994], one cannot just rely on these values. A Gaussian pyramid may be used to add a scale component. For each level, this results in a fluctuation measure of the corresponding area in the original image. One may then rely on the perceptual findings in [Mäkelä et al. 1994], to predict the maximally-allowed temporal variation that will not lead to perceived flickering. If it is found that these thresholds are exceeded, one may compute by how much the temporal fluctuation needs to be reduced. Then, these values may be propagated to the lowest-pixel level by taking the maximum reduction that was attributed to it on any of the higher levels. The maximum ensures that the final flickering will be imperceptible on all scales.

To finally reduce flickering, a reference image sequence with low temporal fluctuation may be used and blended with the solution so as to match the necessary decrease in contrast. Preferably, a Lanczos-filtered sequence may be used, which in experiments came closest to the inventive result (Sec. 6). It is important to derive a sequence of images by shifting the high-resolution image by its velocity before filtering. Due to its low-pass-filter nature, Lanczos-filtering results in low temporal fluctuation, low enough to enable a contrast reduction via blending. Alternatively, a single filtered image could be used, but in practice this was never necessary.

Several application scenarios were presented and tested in a user-study in order to illustrate their effectiveness.

A 22 inch (diagonal) 120 Hz Samsung SyncMaster 2233 display was used at its native full-hd resolution of 1680 x 1050 and lower resolutions where indicated. This addresses the fact that displays constantly grow, often already exceeding 100 inches, but keep their resolution on the level of full-hd. On such a screen, pixels are approximately four times bigger than in the experiments. The monitor was viewed by the subjects orthogonally at a distance of 50-70 cm. Because some experiments required that two images are simultaneously shown next to each other in a horizontal arrangement, the video sequences and images of resolution 600 x 600 have been used in all studies. A refresh rate of 120 Hz was considered and the original images into three subimages in order to illustrate that the details are also visible for the faster-moving variant (compared to four subimages).

14 participants with normal or corrected-to-normal vision took part in the main part of experiments. In an additional 3D rendering part five participants were considered. Subjects were naive regarding the goal of the experiment and inexperienced in the field of computer graphics. The participants were seated in front of a monitor running the experimental software in a room with controlled artificial lighting. They received standardized written instructions regarding the procedure of the experiment. In all experiments the time for each trial has been unlimited.

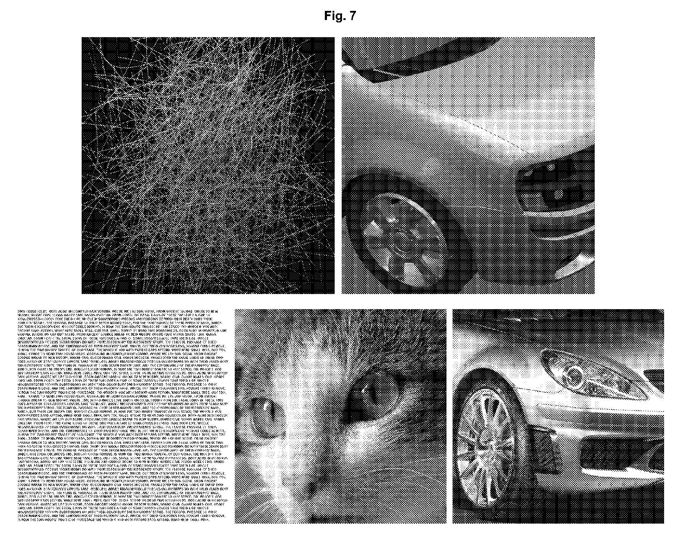

Regarding high-resolution images, the study considered five stimuli shown in Figure 7, including detailed rendering and text as well as natural images (photographs of a cat and a car included in the accompanying video). The hair and car images have been rendered with a high level of detail and include subpixel information from elongated hair strands and tiny sparkles in the metallic paint. Text was used to use readability as an indicator of detail visibility. Finally, we used photographs to check the performance of our method for real images, which often exhibit slightly blurry edges with respect to synthetic images.

The aim of the study was to show that the inventive method outperforms standard image-downsampling techniques. Various velocities were tested the method was compared to Lanczos resampling as well as Mitchell and Netravali [1988], asking subjects to compare the visibility of details.

Figure 5 shows the results of a comparison of the inventive method against Lanczos filtering in 3:1 scale (left) and original scale (middle) as well as Mitchell-Netravali (right).

Subjects compared the static reference image of high-resolution that was placed on the right to a moving image on the left. The left image was per-frame Lanczos-filtered or the inventive solution, initialized randomly and not labeled. More naive solutions like nearest-neighbor filtering have not been considered, as their lower quality and objectionable flickering are readily visible. Subjects could toggle between two methods via the keyboard without any time limit. In the first test scenario, the pixel size in the moving image is 3 times enlarged with respect to the reference image but the scale of the depicted object is preserved. Subjects were asked to choose the method, where the reproduction of details is closest to the reference version. The results of this part of experiment are shown in Fig. 5 (left). The second part of the study was similar to the first (Lanczos), but moving full-hd resolution images have been compared without any reference (Fig. 5, middle).

Next, the inventive method was tested against Mitchell-Netravali filtering. Two parameters can balance this filter between sharpening and smoothing making it adequate for a large variety of possible images [Mitchell and Netravali 1988]. The subjects were asked to adjust those parameters to match their preferences with respect to the high-resolution image. Later, they were asked to compare their result with the inventive technique, again by toggling between the methods (Fig. 5, right).

The technique according to the invention performed better in terms of detail reconstruction, even when allowing filter parameter adjustments. During all experiments no flickering or temporal artifacts have been observed. A series of t-tests showed statistical difference in all cases with a significance level of .05.

Figure 6 shows the results of a comparison of the inventive method with standard downsampling, applied to the problem of character recognition. The horizontal lines at the bottom of the diagram indicate significant statistical difference.

More particularly, the inventors investigated horizontally moving text often used for TV news channels, as well as hand-held devices. To push the inventive technique to the limits, it was attempted to produce a 2 x 3 pixel sized font containing English capital letters. It was created by hand at a 6 x 9 resolution, but not much time was invested in optimizing the characters. All the letters were shown in random order to subjects asking for identification and the inventive method was compared to Lanczos filtering. The characters have been placed in chunks of five characters rather than isolated fonts to mimic a text document.

As can be seen from figure 6, the results are not perfect, but they indicate the quality increase due to the inventive apparent resolution enhancement. Performed series of t-tests showed significant difference between the created font and standard downsampling for 13 out of 26 (Fig. 6) for a significance level of .05. The biggest improvement was, as expected, in the horizontal direction that coincides with the movement. H, K, M, N, R, X contain much horizontally oriented information, making them easy to read. On the other hand, the lack of improvement in vertical direction, affects letters such as: B, G.

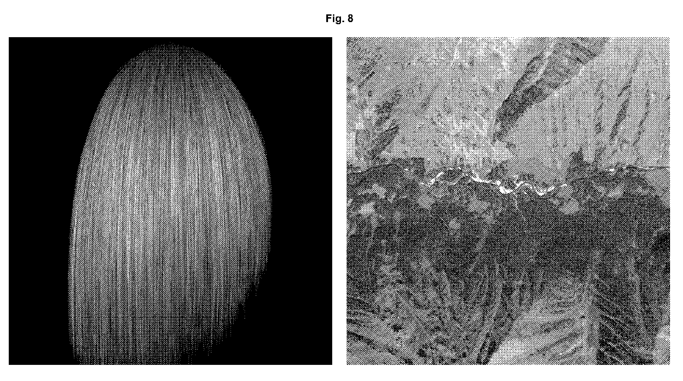

A smaller study was also conducted for the above-described 3D rendering applications. The eye tracking was estimated based on a derived motion flow. It was assumed that the motion is piecewise linear for different image regions, and thus that the inventive technique may be applied locally. A scene showing highly detailed hair and a 3D terrain in a fly-over view similar to Google Earth was used. Snapshots from those animation sequences are shown in <u>figure 8</u>. Similar to the high-resolution image experiment, subjects were able to toggle between moving images for our method and respectively Lanczos and Mitchel filtering. All five subjects chose the inventive solution over Lanczos and Mitchel for both scenes.

References

ALLEN, W., AND ULICHNEY, R. 2005. Wobulation: Doubling the addressed resolution of projection displays. In Proceedings of the Symposium Digest of Technical Papers (SID), vol. 47.4 of The Society for Information Display, 1514-1517.

BIJL, P., SCHUTTE, K., AND HOGERVORST, M. A. 2006. Applicability of TOD, MTDP, MRT and DMRT for dynamic image enhancement techniques. In Society of Photo-Optical Instrumentation Engineers (SPIE) Conference Series, vol. 6207.

BURR, D. C. 1979. Acuity for apparent vernier offset. Vision Research 19, 7, 835 - 837.

COLEMAN, T. F., AND LI, Y. 1996. A reflective newton method for minimizing a quadratic function subject to bounds on some of the variables. SIAM J. on Optimization 6, 4, 1040-1058.

CURCIO, C. A., SLOAN, K. R., KALINA, R. E., AND HEN DRICKSON, A. E. 1990. Human photoreceptor topography. The Journal of comparative neurology 292, 4, 497-523.

DAMERA-VENKATA, N., AND CHANG, N. L. 2009. Display supersampling. ACM Trans. Graph. 28, 1, 9:1-9:19.

DE LANGE, H. 1958. Research into the dynamic nature of the human fovea ->Cortex systems with intermittent and modulated light. I. Attenuation characteristics with white and colored light. J. Opt. Soc. Am. 48, 11, 777-783.

DEERING, M. F. 2005. A photon accurate model of the human eye. ACM Trans. Graph. (Proc. SIGGRAPH 2005) 24, 3, 649-658.

FAHLE, M., AND POGGIO, T. 1981. Visual hyperacuity: Spatiotemporal interpolation in human vision. Proceedings of the Royal Society of London. Series B, Biological Sciences 213, 1193, 451-477. GIBSON, S. 2003. Subpixel font rendering technology. http://www.grc.com/cleartype.htm.

HARA, Z., AND SHIRAMATSU, N. 2000. Improvement in the picture quality of moving pictures for matrix displays. J. SID 8, 2, 129-137. KALLONIATIS, M., AND LUU, C. 2009. Temporal resolution. http://webvision.med.utah.edu/temporal.html.

KLOMPENHOUWER, M. A., AND DE HAAN, G. 2003. Subpixel image scaling for color-matrix displays. J. SID 11, 1, 99-108.

KOPF, J., UYTTENDAELE, M., DEUSSEN, O., AND COHEN, M. 2007. Capturing and viewing gigapixel images. ACM Trans. Graph. (Proc. SIGGRAPH 2007) 26, 3, to appear.

KRAPELS, K., DRIGGERS, R. G., AND TEANEY, B. 2005. Target-acquisition performance in undersampled infrared imagers: static imagery to motion video. Applied Optics 44, 33, 7055-7061.

LAIRD, J., ROSEN, M., PELZ, J., MONTAG, E., AND DALY, S. 2006. Spatio-velocity CSF as a function of retinal velocity using unstabilized stimuli. In Human Vision and Electronic Imaging XI, vol. 6057 of SPIE Proceedings Series, 32-43.

MÄKELÄ, P., ROVAMO, J., AND WHITAKER, D. 1994. Effects of luminance and external temporal noise on flicker sensitivity as a function of stimulus size at various eccentricities. Vision Research 34, 15, 1981-91.

MARTINEZ-CONDE, S., MACKNIK, S. L., AND HUBEL, D. H. 2004. The role of fixational eye movements in visual perception. Nature Reviews Neuroscience 5, 3, 229-239.

MCKEE, S. P., AND TAYLOR, D. G. 1984. Discrimination of time: comparison of foveal and peripheral sensitivity. J. Opt. Soc. Am. A 1, 6, 620-628.

MESSING, D. S., AND KEROFSKY, L. J. 2006. Using optimal rendering to visually mask defective subpixels. In Human Vision and Electronic Imaging XI, vol. 6057 of SPIE Proceedings Series, 236-247.

MITCHELL, D. P., AND NETRAVALI, A. N. 1988. Reconstruction filters in computer-graphics. Proc. SIGGRAPH 22, 4, 221-228.

PARK, S., PARK, M., AND KANG, M. 2003. Super-resolution image reconstruction: A technical overview. IEEE Signal Processing Magazine 20, 3, 21-36. 586

PURVES, D., SHIMPI, A., AND LOTTO, B. R. 1999. An empirical explanation of the Cornsweet effect. J. Neuroscience 19, 19, 8542-8551. SCHÜTZ, A. C., BRAUN, D. I., KERZEL, D., AND GEGENFURT NER, K. R. 2008. Improved visual sensitivity during smooth pursuit eye movements. Nat. Neuroscience 11, 10, 1211-1216.

SPENCER, G., SHIRLEY, P., ZIMMERMAN, K., AND GREEN BERG, D. P. 1995. Physically-based glare effects for digital images. In Proc. ACM SIGGRAPH '99, 325-334.

TEKALP, A. 1995. Digital Video Processing. Prentice Hall.

VAN HATEREN, J. H. 2005. A cellular and molecular model of response kinetics and adaptation in primate cones and horizontal cells. J. Vision 5, 4, 331-347.

WANDELL, B. 1995. Foundations of Vision. Sinauer Associates.

ZAVAGNO, D., AND CAPUTO, G. 2001. The glare effect and the perception of luminosity. Perception 30, 2, 209-222.

**Claims**

1. Method for displaying a digital image ($I_H$) on a display, the digital image having a higher resolution than the display, the method comprising the steps:

   - generating a sequence of digital subimages ($I_{L1},..., I_{Ln}$) having display resolution, based on the digital image ($I_H$) ; and
   - displaying the digital subimages in sequence; **characterized in that** the sequence of digital subimages are generated based on a model of the retina.

2. Method according to claim 1, further comprising the step of:

   - shifting the digital image in a predetermined direction.

3. Method according to claim 2, wherein the subimages are generated such that a retinal image predicted by the model from the sequence of digital subimages is essentially equal to the digital image ($I_H$).

4. Method according to claim 3, where the subimages are generated in a process of optimization in which all subimages are locally optimized depending on the local content of digital image ($I_H$) to make the predicted retinal image essentially equal to the digital image ($I_H$).

5. Method according to claim 4, wherein a response of a photoreceptor to the sequence of digital subimages is modeled to be essentially equal to

$$\int_0^T I(p(t),t)\,dt$$

wherein T is an integration time of the photoreceptor, p is a pixel position of the photoreceptor and I(p,t) is an intensity of the pixel at time t.

6. Method according to claim 5, wherein the response of the photoreceptor is given by

$$\sum_{t=0}^T w_t I(p(t),t)$$

wherein weights $W_t$ encode the transfer of the sequence of subimages to the photoreceptor.

7. Method according to claim 6, wherein the generation of the sequence of digital subimages is further based on the dynamic range of the display.

8. Method according to claim 6, where T is an integer number of subimages that is perfectly integrated by the human eye depending on the given framerate.

9. Method according to claim 8, wherein T is an integer and equal to three (3) for a 120 Hz display.

10. Method according to claim 8, wherein T is an integer and equal to four (4) for a 120 Hz display.

11. Method according to claim 8, wherein T is an integer and equal to two (2) for a 60 Hz display.

12. Method according to claim 6, wherein the sequence of subimages is post-processed for reducing flicker.

13. Method according to claim 12, wherein the postprocessing is done by adapting the temporal variation of the sequence of subimages.

14. Method according to claim 1, applied to a sequence of images, wherein a sequence of subimages for each image is generated further based on existing local motion in image regions having dynamic content.

15. Method according to claim 14, wherein the subimage sequences of a multitude of images of the sequence are optimized jointly.

16. Method according to claim 14, wherein an eye tracker is used to determine a region of the image that is projected to the fovea

17. Method according to claim 14, wherein an eye tracker is used to determine an eye pursuit velocity.

18. Method according to claim 14, wherein the image is segmented into coherently moving regions for which the optimization is applied separately.

19. Display device, comprising:

   - means for generating a sequence of digital subimages ($I_{L1}$,..., $I_{Ln}$) having display resolution, based on the digital image ($I_H$) ;
   - means for displaying the digital subimages in sequence; and

wherein the display device is adapted to execute a method according to one of claims 1 to 18.

Fig. 1

Reality · Display · Retina

Figure 1: Fixational eye tracking over an region of interest in combination with a low-resolution image sequence leads to an apparent high-resolution image via integration in the retina.

**Fig. 2**

Figure 2: Spatio-temporal signal integration. Left: Two pixels (yellow and blue square) covered by receptors (circles). Right: Intensity response of receptors A–E over time for changing pixel intensity in three frames (dotted lines). For static receptors (A, B and E) the resolution cannot be improved because the same signal is integrated over time. Due to motion (arrow), receptors C and D, although beginning their integration in the same pixel, observe different signals which may be exploited for resolution enhancement.

**Fig. 3**

Figure 3: The figure shows, how the inventive frame optimization for rapid display, which takes into account a velocity of moving image, can improve perceived resolution in the direction of movement. The inventive technique is compared to Lanczos resampling. Note that moving cases are simulations of perceived images assuming decomposition into 3 subimages. The result is based on the inventive optimization. For moving Lanczos, each subimage is computed as a filtered version of the translated original image. The eye simulation is computed as a integration of subimages by assuming a perfect tracking.

Fig. 3 shows an example of a horizontal movement. The resulting spatial apparent resolution is much higher horizontally (blue) than for a standard bandwidth-filtered image, while vertical resolution (red) is similar to the case of a moving Lanczos resampling.

Fig. 4

Lanczos

Our
before
reduction

Our
after
reduction

Original image          Reduction map

Figure 4: Flickering reduction. Left: Original high resolution image. Center: Reduction map. Right: Outcome of Lanczos filtering, as well as the inventive approach before and after flickering reduction for the marked regions. Note that in the regions of strong temporal contrast reduction an improvement over Lanczos filtering is visible. Similar to Fig. 2, images for the inventive approach are simulations of perceived images assuming motion and perfect eye tracking.

**Fig. 5**

Figure 5: Inventive method against Lanczos in 3:1 scale (left) and original scale (middle) as well as Mitchell-Netravali (right).

**Fig. 6**

Figure 6: Character recognition: Standard filtering vs. Invention. Dark horizontal lines indicate significant statistical difference.

Fig. 7

Fig. 8

Europäisches
Patentamt
European
Patent Office
Office européen
des brevets

## EUROPEAN SEARCH REPORT

Application Number

EP 10 16 5882

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/165314 A1 (BASU SUMIT [US] ET AL) 27 July 2006 (2006-07-27) | 1-4,19 | INV. G06T3/40 |
| Y | * abstract * | 14,15 | G09G5/391 |
| A | * paragraph [0005] * <br> * paragraph [0032] * <br> * paragraph [0038] * <br> * paragraph [0040] * <br> ----- | 5-13 | G06T5/50 |
| Y | EP 1 833 042 A2 (TOSHIBA KK [JP]) 12 September 2007 (2007-09-12) * abstract * * paragraphs [0001], [0004] * * paragraphs [0008], [0014] * ----- | 14,15 | |
| A | US 6 417 867 B1 (HALLBERG BRYAN SEVERT [US]) 9 July 2002 (2002-07-09) * abstract * * column 2, paragraph 1 * * column 4, paragraph 1 * * figure 2 * ----- | 16-18 | |

TECHNICAL FIELDS
SEARCHED      (IPC)

G06T
G09G
H04N

The present search report has been drawn up for all claims

| Place of search | Date of completion of the search | Examiner |
|---|---|---|
| Munich | 2 March 2011 | Turina, Andreas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 16 5882

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2011

| Patent document cited in search report | | Publication date | Patent family member(s) | | Publication date |
|---|---|---|---|---|---|
| US 2006165314 | A1 | 27-07-2006 | NONE | | |
| EP 1833042 | A2 | 12-09-2007 | JP | 2007240873 A | 20-09-2007 |
| | | | US | 2007211000 A1 | 13-09-2007 |
| US 6417867 | B1 | 09-07-2002 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7548662 B2, Basu

**Non-patent literature cited in the description**

- **ALLEN, W. ; ULICHNEY, R.** Wobulation: Doubling the addressed resolution of projection displays. *Proceedings of the Symposium Digest of Technical Papers (SID), vol. 47.4 of The Society for Information Display,* 2005, vol. 47.4, 1514-1517
- **BIJL, P. ; SCHUTTE, K. ; HOGERVORST, M. A.** Applicability of TOD, MTDP, MRT and DMRT for dynamic image enhancement techniques. *Society of Photo-Optical Instrumentation Engineers (SPIE) Conference Series,* 2006, vol. 6207
- **BURR, D. C.** Acuity for apparent vernier offset. *Vision Research,* 1979, vol. 19 (7), 835-837
- **COLEMAN, T. F. ; LI, Y.** A reflective newton method for minimizing a quadratic function subject to bounds on some of the variables. *SIAM J. on Optimization,* 1996, vol. 6 (4), 1040-1058
- **CURCIO, C. A. ; SLOAN, K. R. ; KALINA, R. E. ; HEN DRICKSON, A. E.** Human photoreceptor topography. *The Journal of comparative neurology,* 1990, vol. 292 (4), 497-523
- **DAMERA-VENKATA, N ; CHANG, N. L.** Display supersampling. *ACM Trans. Graph.,* 2009, vol. 9 (1-9), 19
- **DE LANGE, H.** Research into the dynamic nature of the human fovea ->Cortex systems with intermittent and modulated light. I. Attenuation characteristics with white and colored light. *J. Opt. Soc. Am.,* 1958, vol. 48 (11), 777-783
- **DEERING, M. F.** A photon accurate model of the human eye. *ACM Trans. Graph. (Proc. SIGRAPH 2005,* 2005, vol. 24 (3), 649-658
- **FAHLE, M. ; POGGIO, T.** Visual hyperacuity: Spatiotemporal interpolation in human vision. Proceedings of the Royal Society of London. *Series B, Biological Sciences,* 1981, vol. 213 (1193), 451-477
- **GIBSON, S.** *Subpixel font rendering technology,* 2003, www.grc.com/cleartype.htm
- **HARA, Z. ; SHIRAMATSU, N.** Improvement in the picture quality of moving pictures for matrix displays. *J. SID,* 2000, vol. 8 (2), 129-137
- **KALLONIATIS, M. ; LUU, C.** *Temporal resolution,* 2009, http://webvision.med.utah.edu/temporal.html
- **KLOMPENHOUWER, M. A. ; DE HAAN, G.** Subpixel image scaling for color-matrix displays. *J. SID,* 2003, vol. 11 (1), 99-108
- **KOPF, J. ; UYTTENDAELE, M. ; DEUSSEN, O. ; COHEN, M.** Capturing and viewing gigapixel images. *ACM Trans. Graph. (Proc. SIGGRAPH 2007,* 2007, vol. 26, 3
- **KRAPELS, K. ; DRIGGERS, R. G. ; TEANEY, B.** Target-acquisition performance in undersampled infrared imagers: static imagery to motion video. *Applied Optics,* 2005, vol. 44 (33), 7055-7061
- **LAIRD, J. ; ROSEN, M. ; PELZ, J. ; MONTAG, E. ; DALY, S.** Spatio-velocity CSF as a function of retinal velocity using unstabilized stimuli. In Human Vision and Electronic Imaging XI. *SPIE Proceedings Series,* 2006, vol. 6057, 32-43
- **MÄKELÄ, P. ; ROVAMO, J. ; WHITAKER, D.** Effects of luminance and external temporal noise on flicker sensitivity as a function of stimulus size at various eccentricities. *Vision Research,* 1994, vol. 34 (15), 1981-91
- **MARTINEZ-CONDE, S. ; MACKNIK, S. L. ; HUBEL, D. H.** The role of fixational eye movements in visual perception. *Nature Reviews Neuroscience,* 2004, vol. 5 (3), 229-239
- **MCKEE, S. P. ; TAYLOR, D. G.** Discrimination of time: comparison of foveal and peripheral sensitivity. *J. Opt. Soc. Am. A,* 1984, vol. 1 (6), 620-628
- **MESSING, D. S. ; KEROFSKY, L. J.** Using optimal rendering to visually mask defective subpixels. *Human Vision and Electronic Imaging XI, vol. 6057 of SPIE Proceedings Series,* 2006, vol. 6057, 236-247
- **MITCHELL, D. P. ; NETRAVALI, A. N.** Reconstruction filters in computer-graphics. *Proc. SIGGRAPH,* 1988, vol. 22 (4), 221-228
- **PARK, S. ; PARK, M. ; KANG, M.** Super-resolution image reconstruction: A technical overview. *IEEE Signal Processing Magazine,* 2003, vol. 3 (21-36), 586
- **PURVES, D. ; SHIMPI, A. ; LOTTO, B. R.** An empirical explanation of the Cornsweet effect. *J. Neuroscience,* 1999, vol. 19 (19), 8542-8551

- **SCHÜTZ, A. C. ; BRAUN, D. I. ; KERZEL, D. ; GE-GENFURT NER, K. R.** Improved visual sensitivity during smooth pursuit eye movements. *Nat. Neuroscience,* 2008, vol. 11 (10), 1211-1216
- **SPENCER, G. ; SHIRLEY, P. ; ZIMMERMAN, K. ; GREEN BERG, D. P.** Physically-based glare effects for digital images. *Proc. ACM SIGGRAPH '99,* 1995, 325-334
- **TEKALP, A.** Digital Video Processing. Prentice Hall, 1995
- **VAN HATEREN, J. H.** A cellular and molecular model of response kinetics and adaptation in primate cones and horizontal cells. *J. Vision,* 2005, vol. 5 (4), 331-347
- **WANDELL, B.** Foundations of Vision. Sinauer Associates, 1995
- **ZAVAGNO, D. ; CAPUTO, G.** The glare effect and the perception of luminosity. *Perception,* 2001, vol. 30 (2), 209-222